**Europäisches Patentamt**

**European Patent Office**

**Office européen des brevets**

(19)

(11) Veröffentlichungsnummer: **0 332 071 B2**

(12)

# NEUE EUROPÄISCHE PATENTSCHRIFT

(45) Veröffentlichungstag der neue Patentschrift:
**15.11.95**

(21) Anmeldenummer: **89103742.6**

(22) Anmeldetag: **03.03.89**

(51) Int. Cl.6: **C09C 1/00**, C09C 1/36

Die Akte enthält technische Angaben, die nach dem Eingang der Anmeldung eingereicht wurden und die nicht in dieser Patentschrift enthalten sind.

(54) **Verfahren zur Herstellung von besonders blaustichigen Perlglanzpigmenten.**

(30) Priorität: **11.03.88 DE 3808070**

(43) Veröffentlichungstag der Anmeldung:
**13.09.89 Patentblatt 89/37**

(45) Bekanntmachung des Hinweises auf die Patenterteilung:
**26.02.92 Patentblatt 92/09**

(45) Bekanntmachung des Hinweises auf die Entsheidung über den Einspruch:
**15.11.95 Patentblatt 95/46**

(84) Benannte Vertragsstaaten:
**BE CH ES FR GB IT LI NL SE**

(56) Entgegenhaltungen:
EP-B- 0 081 155          DE-A- 3 433 657
JP-A-58 164 653          JP-A-59 126 468
JP-A-60 051 616          JP-A-60 184 570
JP-A-61 000 392

(73) Patentinhaber: **BASF Aktiengesellschaft
Carl-Bosch-Strasse 38
D-67063 Ludwigshafen (DE)**

(72) Erfinder: **Ostertag, Werner, Dr.
Oberer Bergelweg 2
D-6718 Gruenstadt (DE)**
Erfinder: **Mronga, Norbert, Dr.
Ringstrasse 2
D-6915 Dossenheim (DE)**
Erfinder: **Graessle, Ulrich, Dr.
Kastanienstrasse 24
D-6737 Boehl-Iggelheim (DE)**

CHEMICAL ABSTRACTS, Band 101, Nr. 22, November 1984 Seite 92, Nr. 193781r, Columbus, Ohio, US; & JP-A-59 126 468

Ullmanns Enzyklopädie der Technischen Chemie, 4. Auflage, Band 3, S. 415-419

Ullmanns Enzyklopädie der Technischen Chemie, 4. Auflage, Band 2, S. 301-311

Chemical Engineering Practice, vol. 3, 1957, pp. 20-3, 20-32, 20-33, 20-34

**Beschreibung**

Vorliegende Erfindung betrifft ein Verfahren zur Herstellung von besonders blaustichigen dunklen Perlglanzpigmenten durch Reduktion von mit Titandioxid belegten Glimmerpigmenten mit Ammoniak.

Aus der japanischen Offenlegungsschrift 164 653/83 ist ein Verfahren zur Herstellung von Perlglanzpigmenten bekannt, bei dem schuppenartiger Glimmer, der mit Titanoxid oder Titanoxidhydrat beschichtet ist, in einem Ammoniakstrom bei Temperaturen von 600 bis 950 °C behandelt wird. Die Titandioxidschichten können auch noch Metalloxide wie $Fe_2O_3$, ZnO, $Al_2O_3$, $ZrO_2$, $SnO_2$, CuO und $Cr_2O_3$ enthalten. Durch diese reduzierende Behandlung, bei der nach Angaben der Offenlegungsschrift Titanmonoxid entstehen soll, werden Pigmente erhalten, deren Farbton von blau, blaustichig bis nach schwarz bzw. schwarzbraun reicht, wobei die schwarzen Töne dann erhalten werden sollen, wenn das gesamte Titandioxid in Titanmonoxid umgewandelt worden ist.

In der japanischen Offenlegungsschrift 126 468/84 werden ebenfalls Perlglanzpigmente auf der Basis von Glimmer beschrieben, bei denen die Glimmeroberflächen mit Titandioxid und niedrigeren Titanoxiden oder lediglich mit niedrigeren Titanoxiden beschichtet sind. Diese Pigmente werden ebenfalls durch eine reduzierende Behandlung von mit Titandioxid beschichteten Glimmerpartikeln, mit z.B. Wasserstoff, erhalten. Als Ausgangsprodukte wählt man Titandioxidglimmer-Perlglanzpigmente, die Interferenzfarben aufweisen. Diese Interferenzfarben sind abhängig von der Dicke der Titandioxidschicht, die von 20 bis 200 $\mu$m betragen kann. Die Interferenzfarben der Ausgangspigmente können je nach Dicke der $TiO_2$-Schicht von silber, gold, rot, violett, blau nach grün reichen. Durch die reduzierende Behandlung sollen Pigmente erhalten werden, die sich gegenüber den Ausgangspigmenten durch einen frischeren Farbton auszeichnen.

In der DE-OS 34 33 657 wird ein Perlglanzpigment beschrieben, bei dem Glimmerplättchen mit einem zweischichtigen Überzug versehen sind. Der erste Überzug besteht, wie in der oben zitierten japanischen Patentanmeldung 126 468/84 beschrieben, aus niedrigen Oxiden des Titans oder aus Gemischen dieser Oxide mit Titandioxid. Auf diesem ersten Überzug ist ein zweiter Überzug aufgebracht, der aus Titandioxid besteht. Diese Pigmente sollen sich durch einen kräftigeren Farbton und Perlglanz sowie eine überlegene Verträglichkeit und Stabilität sowie Widerstandsfähigkeit gegenüber der Einwirkung von Licht, Säuren, Alkali, Lösungsmitteln und Wärme auszeichnen. Sie haben aber den Nachteil, daß sie gegenüber den Ausgangsprodukten einen zusätzlichen Verfahrensschritt zu ihrer Herstellung benötigen.

In der japanischen Offenlegungsschrift 184 570/85 sind schließlich ebenfalls Perlglanzpigmente beschrieben, bei denen Glimmerplättchen mit Titanoxiden bzw. Titanoxinitriden beschichtet sind, die, wie bei der oben genannten japanischen Offenlegungsschrift 164 653/83 durch eine reduzierende Behandlung von mit $TiO_2$ beschichteten Glimmerpartikeln mit Ammoniak erhalten werden. Unter Titanoxiden bzw. Titanoxinitriden werden Verbindungen der Formel $Ti_xN_yO_z$ verstanden, wobei x Werte von 0,2 bis 0,6, y Werte von 0,05 bis 0,6 und z Werte von 0,1 bis 0,9 annehmen können. Auch hier erhält man Pigmente mit Interferenzfarben wie silber, gold, rot, blau und grün.

Die genannten Pigmente haben den Vorteil, daß sie keine giftigen Komponenten enthalten, und daher zum Färben von Kosmetika geeignet sind, daß sie thermisch stabil und daß sie mit Harzen gut verträglich sind. Es hat sich jedoch gezeigt, daß diese Pigmente, falls man einen anderen Farbton als schwarz wünscht, nur schwer reproduzierbar herzustellen sind und insbesondere Pigmente mit einem besonders blaustichigen Farbton, d.h. mit einem Farbton entsprechend einem CILAB-Farbwert von b* $\leq$ -10 (gemessen bei einer Winkeldifferenz von 20° zum Glanzwinkel, Normlichtart D 65), wenn überhaupt, dann nur zufällig herstellbar sind.

Der vorliegenden Erfindung lag daher die Aufgabe zugrunde, Perlglanzpigmente, die sich durch einen besonders blaustichigen Farbton auszeichnen, in reproduzierbarer Weise durch Reduktion von mit Titandioxid belegten Glimmerpigmenten mit Ammoniak bei erhöhten Temperaturen herzustellen.

Es wurde nun gefunden, daß diese Aufgabe dadurch gelöst werden kann, daß man Glimmerpigmente einsetzt, deren optische Schichtdicke 50 bis 100 nm oder 300 bis 340 nm beträgt, die Behandlung mit Ammoniak bei Temperaturen von 750 bis 850 °C durchführt und die Pigmente während der Reduktion in ständiger Bewegung hält.

Unter optischer Schichtdicke wird das Produkt aus geometrischer Schichtdicke x Brechungszahl des Anatas (2,5) bzw. des Rutils (2,7) verstanden. $TiO_2$ beschichtete Glimmerpartikel, die eine optische Schichtdicke von 50 bis 100 nm aufweisen, sind silbrig, während sie bei optischen Schichtdicken von 300 bis 340 nm eine blaue Interferenzfarbe zeigen.

Bei der erfindungsgemäßen Behandlung der mit $TiO_2$ beschichteten Glimmerpartikel bildet sich ein komplexes Gemisch. Röntgenuntersuchungen zeigen, daß sich neben nicht reduziertem $TiO_2$ je nach Reduktionsbedingungen eine Vielzahl von oxidischen und/oder nitridierten Titanverbindungen bilden mit einer Oxidationszahl von Ti < 4, z.B. niedrigere Titanoxide bis zum TiO, Titanoxinitride und auch Titannitrid.

Die blaue Farbe in den erfindungsgemäß erhaltenen Pigmenten beruht vermutlich auf oxidischen Titanverbindungen, in denen das Titan in der dreiwertigen Stufe vorliegt wobei die Helligkeit des Pigmentes beeinflußt wird durch Anwesenheit des dunklen TiO und TiN.

Die Blaufärbung (CILAB-Farbwert b*) und die Dunkelfärbung (CILAB-Farbwert L*) der reduzierten Produkte sind nicht zu entkoppeln. Die Reduktionsbedingungen können jedoch so eingestellt werden, daß sich relative Intensitätsunterschiede in der Blau- und Dunkelfärbung ergeben. Während mit zunehmender Reduktionsdauer die Dunkelfärbung zunimmt, durchläuft die Blaufärbung ein Maximum und nimmt dann wieder ab. Bei sehr weitgehend reduzierten Proben stellt sich bei abnehmender Blaufärbung ein rotstichiger Farbton ein.

Ein eingehendes Studium zum Reduktionsverhalten von $TiO_2$-beschichtetenGlimmerpigmenten zeigt, daß die Bildung eines möglichst blaustichigen Reduktionsproduktes vom Zusammenwirken zahlreicher Parameter und Faktoren abhängt.

Von Bedeutung ist zunächst die Wahl von Ammoniak als reduzierendes Gas, da mit anderen reduzierenden Gasen wie Wasserstoff oder Kohlenmonoxid eine nicht so intensive Blaufärbung der Reaktionsprodukte erzielt werden kann. Es hat sich weiter gezeigt, daß die Verwendung von getrocknetem Ammoniak ebenfalls von Bedeutung ist, da die Anwendung von feuchtem Ammoniak die Reduktion stark erschwert. Vorteilhaft setzt man daher Ammoniak mit einer Restfeuchte von $\leq 0,02$ mg $H_2O/l$ $NH_3$ ein. Da sich bei der reduzierenden Behandlung Wasser, wenn auch nur in geringen Mengen, bildet, ist es zweckmäßig, daß das Gas mit einer Strömungsgeschwindigkeit von mindestens 1 cm/sec den Reaktionsraum durchströmt. Selbstverständlich kann das zur Reduktion dienende Ammoniak mit gegenüber den Reaktionskomponenten und -produkten inerten Gasen, wie Stickstoff oder Kohlendioxid, verdünnt sein. Der Anteil des Ammoniaks kann bis auf 10 Vol.% herabgesetzt werden.

Der Reduktionstemperatur kommt eine wichtige Rolle zu. Beginnende Dunkel- und Blaufärbung zeigt sich bereits ab 400°C, die Obergrenze der Reduktion ist durch die Temperaturstabilität des Glimmer-Substrates bestimmt. Glimmer (Muskovit) zeigt je nach Provinienz ab ca. 860°C strukturelle Instabilitäten, gibt bis zu 4 Gew.% $H_2O$ ab und wird brüchiger. Um derart unerwünschte Erscheinungen zu vermeiden, ist es zweckmäßig, die Reduktion nicht über der Maximaltemperatur von 860°C durchzuführen. Zur Erzielung von besonders blaustichigen Produkten wird daher die Reduktion bei Temperaturen von 750 bis 850°C durchgeführt. Mit zunehmender Reduktionszeit nimmt die Dunkelfärbung zu, die Blaufärbung durchläuft ein Maximum.

Die Dauer der reduzierenden Behandlung richtet sich nach der Temperatur und der Modifikation, in der das $TiO_2$ in der Beschichtung vorliegt, d.h. als Rutil und/oder Anatas. Es hat sich überraschenderweise gezeigt, daß Beschichtungen der Ausgangspigmente, die vollständig in der Rutilform vorliegen, rascher reduziert werden können als Pigmente, in denen das $TiO_2$ in der Anatasform oder Anatas im Gemisch mit Rutil vorliegt. Dies bedeutet in anderen Worten, daß man bei vergleichbaren Bedingungen bei mit Rutil belegten Glimmerpigmenten rascher Pigmente mit dem gewünschten b*-Wert von $\leq$ 10 erreicht, als mit anatashaltigen Beschichtungen. Dies ist aus dem Grunde überraschend, als es sich bei der Rutilform des Titandioxids um die energieärmere, und somit wesentlich reaktionsträgere Modifikation des Titandioxides handelt. Bevorzugt werden daher Glimmerpigmente eingesetzt, die mit Rutil beschichtet sind.

Die Dauer der erfindungsgemäßen Behandlung beträgt im allgemeinen 4 bis 8 Stunden, wobei man bei Temperaturen im oberen Teil des Bereiches von 750 bis 850°C kürzere, im unteren Teil längere Reduktionszeiten benötigt, um zu vergleichbaren Ergebnissen zu gelangen. Bei zunehmender Reduktionszeit nimmt die Blaufärbung zu und durchläuft ein Maximum um dann wieder abzunehmen. Damit einhergehend nimmt die Dunkelfärbung laufend zu, so daß man es in der Hand hat, die Helligkeit des blaustichigen Pigmentes durch die Reduktionsdauer zu beeinflussen.

Von Bedeutung für die Herstellung von dunklen blaustichigen Perlglanzpigmenten mit einem b*-Wert von $\leq$ -10 (gemessen bei 20° Winkeldifferenz zum Glanzwinkel, Normlichtart D 65) ist die Kristallstruktur der $TiO_2$-Beschichtung. Systematische Untersuchungen zeigten, daß Beschichtungen, die vollständig in der Rutil-Form vorliegen, bei hohen Temperaturen sehr viel schneller reduziert werden als Anatas-Beschichtungen oder Beschichtungen, die nur teilweise Rutil enthalten. Rutilpigmente liegen nach vergleichbaren Bedingungen stets sehr viel blauer, d.h. mit negativeren b*-Werten vor als Anatas-beschichtete Pigmente.

Bemerkenswert blaustichige Produkte erhält man bei Verwendung von Glimmerpigmenten mit einer optischen Schichtdicke des $TiO_2$, insbesondere in der Rutilform von 300 bis 340 nm. Bei diesen Schichtdicken zeigt das einzusetzende Pigment eine schwach blaue Interferenzfarbe. Während die blaue Interferenzfarbe beim eingesetzten Pulver kaum erkennbar ist, zeigt sich bei zunehmender Reduktion und Dunkelfärbung eine überproportionale Intensivierung der Blaufärbung. Dies ist auf einen additiven Effekt der Interferenzfarbe und der Absorptionsfarbe seitens der niederen Titanoxide zurückzuführen. Im Sonderfall von blauen reduzierten Interferenzpigmenten verstärken sich die blaue Interferenzfarbe und die blaue

4

Absorptionsfarbe der reduzierten niederen Titanoxide.

Bei der Ausarbeitung der Verfahrenstechnik zur Herstellung der besonders blaustichigen dunklen Perlglanzpigmente zeigte sich, daß Verfahren, die ein allseitiges Umspülen der einzelnen Pigmentpartikel möglich machen, bei weitem dem eingangs erwähnten bekannten Verfahren, bei dem reduzierendes Gas in die ruhende Schüttung der plättchenförmigen Perlglanzpigmente eindiffundieren muß, überlegen sind. Allerdings dürfen im Reduktionsgas bewegte Pigmente mechanisch nicht geschädigt werden, da sonst ihre optische Wirkungsweise beeinträchtigt wird. Die erforderliche schonende Behandlung bei weitgehend allseitiger Umspülung der Einzelpartikel durch Reduktionsgas gelingt in einem beheizten Drehrohr, oder einer Drehtrommel, in die Stolperleisten eingebaut sind.

Eine weitere Intensivierung der Blaufärbung bei der Reduktion wird durch Dotierung der $TiO_2$-Beschichtung mit Fremdionen wie Oxiden des sechswertigen Wolframs, des sechswertigen Molybänds und/oder des vierwertigen Zinns bewirkt. Diese Fremdionen werden entweder bereits bei der Herstellung der $TiO_2$-belegten Glimmer mit in die $TiO_2$-Beschichtung eingebaut, oder man läßt sie durch nachträgliches Erhitzen des Einsatzproduktes in Gegenwart von Wolfram (+6), Molybdän (+6) oder Zinn (+4)-Verbindungen in die $TiO_2$-Beschichtung eindiffundieren.

Rasterelektronenmikroskopische Aufnahmen zeigen, daß die Pigmentpartikel ihre äußere Form während der Reduktion nicht verändern. Die Partikelgrößenverteilung bleibt ebenfalls praktisch gleich. Aus lichtmikroskopischen Untersuchungen geht hervor, daß die anfallenden Pigmentpartikel einen homogenen Farbton haben. Als Ausgangsprodukte kommen alle $TiO_2$-beschichteten Glimmersubstrate, wie sie nach bekannten Methoden hergestellt sind, in Frage. Solche Methoden sind beispielsweise beschrieben in den US-Patentschriften 3 087 028, 3 087 829, 4 038 099, der DE-OS 22 14 545, der EP-OS 45 851 und im Pigment Handbook Wiley Interscience, Vol. 1, Seite 829 ff (1987).

Die besonders blaustichigen dunklen Perlglanzpigmente finden Anwendung bei der Pigmentierung hochwertiger Lacke und Anstrichstoffe, besonders von Zweischicht-Automobileffektlacken, Kunststoffen, Druckpasten, dekorativer Keramik und kosmetischen Produkten wie Pudern, Nagellacken, Lidschatten usw. Die Pigmente können für sich allein oder in Kombination mit anderen Effektpigmenten oder Farbpigmenten eingesetzt werden.

Die nachfolgenden Beispiele erläutern die Zusämmenhänge.

A) Folgende Apparatur wurde in den Beispielen 1 bis 15 eingesetzt:

Elektrisch beheizbarer Trommelreaktor aus Edelstahl (RA4), Durchmesser 10 cm, Länge 15 cm. Zur besseren Durchmischung des Produktes ist der Reaktior innen mit sechs in Längsrichtung verlaufenden Stolperleisten von 2 cm Höhe ausgerüstet. Der Reaktor besitzt eine zentrische Öffnung zum Be- und Entgasen. Über ein in den Reaktor einragendes Düsenrohr wird das Reduktionsgas zugeführt. Die Beheizung erfolgt von außen dadurch, daß der gesamte Reaktor in einen aufklappbaren, elektrisch beheizbaren Muffelofen gestellt wird.

B) Zur Bestimmung der CILAB-Farbwerte der erfindungsgemäß hergestellten Produkte diente folgende Vorschrift:

2 g des Pigmentes werden in 18 g eines Polyester-Mischlackes mit 21 Gew.% Feststoffanteil eingerührt und fünf Minuten lang im Red Devil dispergiert. Mit diesem pigmentierten Lack wird ein Rakelabzug auf einer Glasplatte von 2 cm Dicke angefertigt (Planrakel, Naßfilmdicke 200 $\mu$m). Nach 30-minütigem Ablüften an der Luft erfolgt die Messung der Farbwerte durch die Glasoberfläche mit einem DATACOLOR Spektralphotometer MCS 111 mit Metallic-Meßkopf GK 111 bei einer Winkel-Differenz von 20° zum Glanzwinkel. Die Angaben der Farbwerte (L*, a* und b*) beziehen sich auf die Normlichtart D 65. Dabei entspricht L* der Helligkeit, a* dem Rot- bzw. Grünanteil und b* dem Blau- bzw. Gelbanteil.

Die Blaufärbung und die Dunkelfärbung der Reduktionsprodukte ist mit einem Farbmeßgerät nach der CILAB-Methode gemessen und quantifiziert. Je dunkler die Proben anfallen, desto niedriger ist der L*-Wert (Helligkeit), je blauer die Proben sind, desto negativer ist b*.

Beispiele 1 bis 5

In dem unter A) beschriebenen Trommelreaktor werden 200 g eines handelsüblichen silberfarbenen Perlglanzpigmentes, bestehend aus mit 30,5 Gew.% $TiO_2$ in der Anatasform beschichteten Glimmerplättchen mit Teilchendurchmessern von 5 bis 50 $\mu$m (mittlerer Durchmesser 14,2 $\mu$m) und Teilchendicken von 0,1 bis 0,5 $\mu$m bei einer optischen Schichtdicke der $TiO_2$-Schicht von 90 bis 100 nm eingefüllt. Unter Drehen des Reaktors (30 U/Min) wird mit Stickstoff gespült und auf 600°C bzw. 800°C aufgeheizt. Nach Erreichen der Temperatur wird auf Begasung mit über KOH getrocknetem Ammoniak (Strömungsgeschwindigkeit 3,5 cm/sec, Restfeuchte ≦0,02 mg $H_2O$/l $NH_3$) umgestellt und die Reduktion 30, 60, 240 bzw. 360 Minuten lang durchgeführt. Anschließend wird wieder auf Stickstoff-Begasung bis zum Abkühlen auf

EP 0 332 071 B2

Raumtemperatur unter weiterem Drehen umgestellt. Die lichtmikroskopische Untersuchung der so gewonnenen Pigmente zeigt, daß sehr homogene Produkte erhalten werden, bei denen jedes Glimmerteilchen einer Charge den gleichen Farbeindruck erzeugt. Nach o.g. Vorschrift werden die Farbwerte vermessen. Die Reaktionsparameter und Ergebnisse sind der Tabelle 1 zu entnehmen.

**Tabelle 1**

**Reduktion von Anatas-beschichtetem Glimmerpigment mit Ammoniak**

| Bei-spiel | Reaktions-temp./°C | Reaktions-zeit/Min | Farbein-druck | L* | a* | b* |
|---|---|---|---|---|---|---|
| (Vgl) 1 | 600 | 60 | | 106,1 | - 1,3 | 2,8 |
| (Vgl) 2 | 800 | 30 | | 96,7 | - 3,1 | - 2,2 |
| (Vgl) 3 | 800 | 60 | | 95,0 | - 2,9 | - 2,9 |
| (Vgl) 4 | 800 | 240 | | 84,8 | - 3,1 | - 8,1 |
| 5 | 800 | 360 | | 81,1 | - 3,7 | -10,5 |
| O-Wert | - | 0 | | 116,9 | - 1,1 | 2,9 |

Aus der obigen Tabelle 1 ist zu ersehen, daß bei einer Temperatur von 800 °C erst nach 6 Stunden ein besonders blaustichiges Pigment erhalten wird.

Beispiele 6 bis 14

Die Durchführung erfolgt analog den Beispielen 1 bis 5, nur daß anstelle des Anatas-beschichteten Glimmerpigmentes ein Rutil-beschichtetes Pigment gleichen Titangehaltes und gleicher Teilchendurchmesser und Teilchendicke eingesetzt wird. Auch die optische Dicke der $TiO_2$-Schicht beträgt 90 bis 100 nm. Die lichtmikroskopische Untersuchung der so gewonnenen Pigmente zeigt, daß sehr homogene Produkte erhalten werden, bei denen jedes Glimmerteilchen einer Charge den gleichen Farbeindruck erzeugt. Die Reaktionsparameter und Ergebnisse der Farbwertmessung sind der Tabelle 2 zu entnehmen.

6

Tabelle 2

Reduktion von Rutil-beschichtetem Glimmerpigment mit Ammoniak

| Bei-spiel | | Reaktions-temp./°C | Reaktions-zeit/Min | Farbwerte L* | a* | b* |
|---|---|---|---|---|---|---|
| (Vgl) | 6 | 600 | 60 | 108,0 | - 2,4 | 2,8 |
| (Vgl) | 7 | 800 | 30 | 95,8 | - 3,7 | - 3,1 |
| (Vgl) | 8 | 800 | 60 | 93,2 | - 3,9 | - 4,1 |
| | 9 | 800 | 240 | 73,4 | - 7,1 | - 15,5 |
| | 10 | 800 | 360 | 60,2 | - 5,2 | - 13,6 |
| | 11 | 825 | 60 | 84,5 | - 5,8 | - 13,7 |
| | 12 | 825 | 240 | 76,1 | - 6,4 | - 17,0 |
| | 13 | 825 | 360 | 65,9 | - 3,4 | - 17,0 |
| (Vgl) | 14 | 825 | 480 | 45,7 | 8,2 | - 2,6 |
| O-Wert | | - | 0 | 110,2 | - 1,3 | 2,9 |

Aus der Tabelle ist zu ersehen, daß bereits nach 4 Stunden bei einer Temperatur von 800°C ein besonders blaustichiges Pigment erhalten wird, das blaustichiger ist, als das bei längeren Reduktionszeiten aus mit Anatas beschichteten Glimmerpigmenten gemäß Beispiel 5, das aber eine Behandlungszeit von 6 Stunden erfordert.

Beispiel 15

In den unter A) beschriebenen Trommelreaktor werden 200 g eines handelsüblichen Perlglanzpigmentes mit blauer Interferenzfarbe, bestehend aus mit 45,5 Gew.% $TiO_2$ in der Anatasform beschichteten Glimmerplättchen mit Teil chendurchmessern von 5 bis 50 $\mu$m (mittlerer Durchmesser 14,2 $\mu$m), Teilchendicken von 0,1 bis 0,5 $\mu$m und einer optischen $TiO_2$-Schichtdicke von 300 bis 340 nm eingefüllt. Unter Drehen des Reaktors (30 U/Min) wird mit Stickstoff inertisiert und auf 800°C aufgeheizt. Nach Erreichen der Temperatur wird auf Begasung mit einer Mischung aus über KOH getrocknetem Ammoniak und getrocknetem Stickstoff (mit 30 Vol.% Ammoniak in der Mischung, Restfeuchte $\leq$0,02 mg $H_2O$/l Gas) umgestellt und die Reduktion 60 Minuten durchgeführt. Die Gasmischung durchströmt den Reaktor mit einer Geschwindigkeit von 3,5 cm/sec. Anschließend wird auf Stickstoff-Begasung umgestellt und bis zum Abkühlen weiter gedreht. Das erhaltene Pigment zeigt eine brillante blaue Farbe mit hoher Sättigung. Die lichtmikroskopische Untersuchung zeigt, daß ein sehr homogenes Produkt erhalten wird, bei dem jedes Glimmerteilchen den gleichen Farbeindruck erzeugt. Es werden folgende Farbwerte vermessen:

|  | L*: 63,6 | a*: - 4,6 | b*: - 42,8 |
|---|---|---|---|
| O-Probe: | L*: 86,7 | a*: - 2,5 | b*: 14,6 |

Beispiel 16

Die Durchführung des Experimentes erfolgte analog dem Beispiel 15, nur daß anstelle des Anatas-beschichteten Glimmerpigmentes ein Rutil-beschichtetes Pigment gleichen Titangehaltes und gleicher Teilchendurchmesser und Teilchendicke eingesetzt wird. Auch die optische Dicke der $TiO_2$-Schicht beträgt 300 bis 340 nm. Das erhaltene Produkt zeigt eine äußerst brillante blaue Farbe mit hoher Sättigung. Die lichtmikroskopische Analyse zeigt, daß ein sehr homogenes Produkt erhalten wird, bei dem jedes Glimmerteilchen den gleichen Farbeindruck erzeugt. Es werden folgende Farbwerte vermessen:

```
                        L*: 76,2      a*: -5,7      b*: -44,8
        O-Probe         L*:131        a*: -1,1      b*:   2,0
```

Beispiel 17

In diesem Versuch wird $TiO_2$-belegtes Glimmerpigment (16,4 Gew.% Ti) mit einer durchschnittlichen cilasgranulometrisch bestimmten Partikelgröße von 22,4 $\mu$m eingesetzt. Über 95 % der Partikel haben eine Größe zwischen 12 und 48 $\mu$m. Die $TiO_2$-Belegung hat Rutil-Struktur und ist mit $Sn^{+4}$ dotiert (0,7 Gew.% $Sn^{4+}$ bezogen auf das Gesamtgewicht des Pigments). Die optische Schichtdicke der $TiO_2$-Schicht beträgt 90 bis 100 nm.

15 kg dieses Pigments werden in eine außenbeheizte, mit vier 2 cm breiten Stolperleisten ausgekleideten Trommel (Länge 1 m, Durchmesser 0,3 m) eingetragen und unter $N_2$-Atmosphäre auf 800°C erhitzt.

Dann wird die Trommel bei 27 U/Min 6 h lang mit auf 600°C erwärmtem $NH_3$-Gas durchströmt (Restfeuchte $\leq$0,02 mg $H_2O$/l $NH_3$, Strömungsgeschwindigkeit 3,5 cm/sec). Anschließend wird unter Stickstoff abgekühlt.

Das Produkt glänzt tief blauschwarz. Es weist nach der Reduktion eine durchschnittliche cilasgranulometrisch bestimmte mittlere Partikelgröße von 22,8 $\mu$m auf. Die Plättchen erscheinen im Mikroskop mit einem homogenen Farbeindruck.

Die Farbwerte sind:

```
                L*:  69,489      a*: - 5,171      b*: - 20,515
    O-Probe:    L*:  130         a*: - 1,2       · b*:    1,9
```

Patentansprüche

1. Verfahren zur Herstellung von besonders blaustichigen Perlglanzpigmenten durch Reduktion von mit Titandioxid belegten Glimmerpigmenten mit Ammoniak bei erhöhten Temperaturen, dadurch gekennzeichnet, daß man Glimmerpigmente einsetzt, deren $TiO_2$-Belegung eine optische Schichtdicke von 50 bis 100 nm oder 300 bis 340 nm aufweist, die Behandlung mit Ammoniak bei Temperaturen von 750 bis 850°C in einem Drehrohr oder einer Drehtrommel, in die jeweils Stolperleisten eingebaut sind, durchführt und die Pigmente dadurch während der Reduktion in ständiger Bewegung hält.

2. Verfahren nach Anspruch 1, dadurch gekennzeichnet, daß die $TiO_2$-Belegung der eingesetzten Glimmerpigmente ausschließlich in der Rutil-Phase vorliegt.

3. Verfahren nach den Ansprüchen 1 bis 2, dadurch gekennzeichnet, daß das Ammoniak mit gegenüber den Reaktionskomponenten inerten Gasen verdünnt ist.

4. Verfahren nach den Ansprüchen 1 bis 3, dadurch gekennzeichnet, daß die $TiO_2$-Beschichtung des Ausgangspigmentes mit Verbindungen des sechswertigen Wolframs, Molybdäns und/oder des vierwertigen Zinns dotiert ist.

Claims

1. A process for preparing a particularly bluish pearl luster pigment by reduction of a titanium dioxide coated mica pigment with ammonia at elevated temperatures, which comprises using a mica pigment whose $TiO_2$ coating has an optical layer thickness of from 50 to 100 nm or from 300 to 340 nm, performing the treatment with ammonia at from 750 to 850°C in a rotating tube or drum fitted out with trip strips, and thereby keeping the pigment in constant agitation during the reduction.

8

**2.** A process as claimed in claim 1, wherein the TiO$_2$ coating on the mica pigment used is exclusively in the rutile phase.

**3.** A process as claimed in claim 1 or 2, wherein the ammonia has been diluted with a gas which is inert toward the reaction components.

**4.** A process as claimed in any of claims 1 to 3, wherein the TiO$_2$ coating of the starting pigment has been doped with a compound of hexavalent tungsten, hexavalent molybdenum and/or tetravalent tin.

**Revendications**

**1.** Procédé de fabrication de pigments nacrés à dominance bleue particulièrement appuyée par la réduction de pigments micacés garnis de dioxyde de titane, à l'aide d'ammoniac et à des températures élevées, caractérisé en ce que l'on met en oeuvre des pigments micacés dont la garniture de TiO$_2$ présente une épaisseur de couche optique de 50 à 100 nm ou de 300 à 340 nm, on entreprend le traitement à l'ammoniac à des températures de 750 à 850°C dans un tube rotatif ou un tambour rotatif auquel on a à chaque fois incorporé des chicanes de trébuchement et on maintient les pigments en mouvement constant au cours de la réduction.

**2.** Procédé selon la revendication 1, caractérisé en ce que la garniture de TiO$_2$ des pigments micacés mis en oeuvre se présente exclusivement sous la phase rutile.

**3.** Procédé selon les revendications 1 et 2, caractérisé en ce que l'on dilue l'ammoniac avec des gaz qui sont inertes vis-à-vis des composants de la réaction.

**4.** Procédé selon les revendications 1 à 3, caractérisé en ce que la garniture de TiO$_2$ du pigment de départ est dopée avec des composés du molybdène, tungstène hexavalent et/ou de l'étain quadrivalent.